# EUROPEAN PATENT SPECIFICATION

(11) **EP 4 118 041 B1**
(45) Date of publication and mention of the grant of the patent: **16.10.2024**
(21) Application number: 21710282.1
(22) Date of filing: 05.03.2021
(51) Int. Cl.: C02F 5/12, C02F 1/68, C11D 3/00, C11D 7/32, C11D 7/26

(54) **COMPOSITION FOR THE REMOVAL AND PREVENTION OF DEPOSITION OF LIMESCALE**
ZUSAMMENSETZUNG ZUR ENTFERNUNG UND VERHINDERUNG VON KALKABLAGERUNGEN
COMPOSITION POUR L'ÉLIMINATION ET LA PRÉVENTION DE DÉPÔT DE CALCAIRE

(30) Priority: 10.03.2020 GB 202003424
(43) Date of publication of application: 18.01.2023
(73) Proprietor: Reckitt Benckiser Calgon BV, 2132 WT Hoofddorp (NL)
(72) Inventor: DE LAZZARI, Paolo, 30034 Mira (IT); SIMIONATO, Alessandro, 30034 Mira (IT)
(74) Representative: Paredes Rojas, José Francisco
(86) International application number: PCT/EP2021/055609
(87) International publication number: WO 2021/180587

(56) References cited:
- WO-A1-2018/169421
- DE-A1- 102012 107 728
- US-A1- 2019 161 706

## Description

The present invention relates to a liquid water softener composition comprising at least one amino carboxylic complexing agent selected from the group consisting of methyl glycine diacetic acid (MGDA), glutamic acid diacetic acid (GLDA), their salts and combinations thereof, at least one monomeric polycarboxylate selected from the group consisting of, citrates, gluconates, oxydisuccinates, glycerol mono- di- and trisuccinates, carboxymethyloxysuccinates, carboxymethyloxymalonates, dipicolinates, hydroxyethyliminodiacetates, iminodisuccinates, and combinations thereof, and at least one organic acid selected from the group consisting of citric, acetic, formic, glycolic and oxalic acid, and combinations thereof; to a method of removing and preventing the deposition of limescale in a clothes washing machine, to a method of softening the water in the main wash and/or in the rinse cycle of a clothes washing machine and to a use of a composition for softening the water in the main wash and/or the rinse cycle of a clothes washing machine.

### Background

It is well known that certain metal compounds, notably calcium and magnesium compounds, when present in water, have a significant effect on the properties of the water. When Calcium and Magnesium are present at a significant level the water is generally referred to as "hard". Water hardness is a measure of Ca²⁺ and Mg²⁺ concentration in the water and is often indicated in terms of °fH (degrees of French Hardness), which is defined as 10 mg/L CaCOs. Hard water, e.g. having more than 25°fH, contains a significant loading of soluble calcium and magnesium compounds and may require a large amount of soap or detergent in order to form a lather. Scale deposits can readily form from such water, for example on heating or pH change or evaporation. These can be incrustations, which are left on a surface that has come into contact with the hard water. Particular issues arise in ware washing machines, such as dish and clothes washing machines. In particular, scale incrustations may be left on the surfaces of the machines as well as the items washed therein. In particular, issues arise with incrustation of heating elements, which reduce their life span and efficiency. A further issue arises in that scale incrustation can be found on the surface of clothes washed in the clothes washing machines which are perceptible to the wearer as feeling harsh to the touch.

There have been many proposals for removal of metal ions from aqueous solutions. In the industrial context proposals have included filter beds and polymeric filters for capturing heavy metal ions from an aqueous solution flowing within a passageway. In the domestic context chelating compositions or complexing agents can be added to an aqueous washing solution and these can capture metal ions, such as calcium ions. Examples of chelating compositions are given in EP892040A. Further, relevant documents are DE 10 2012 107728 A1, WO 2018/169421 A1, US 2019/161706 A1.

Typically, in ware washing machines cleaning compositions are provided which are "built" which provide a water softening effect and an increase to the efficiency of the detergent used therein. However, such compositions are not effective for softening the water in the rinse cycle of ware washing machines since such compositions are pumped out of the machine along with the dirty water prior to the rinse cycle. Therefore, scale deposits may build up on the hard surfaces of the washing machine such as the heating element, as well as the fabric of the items being worked.

Historically, phosphate-based compounds have been the mainstay of complexing agents, but there is an increasing environmental and regulatory drive to develop phosphate-free detergents. Amino carboxylic complexing agents such as methylglycine-N,N-diacetic acid (MGDA) and L-glutamic acid-N,N-diacetic acid (GLDA) and salts thereof are known to be very effective builder replacements for phosphates in detergent formulations. Their excellent cleaning performance, even in hard water conditions, confers advantages over other P-free builders. However, in water-softener compositions comprising only GLDA at low concentrations, there will still be considerable encrustations deposited on, for example, heating elements.

It is an object of the present invention to provide a composition that when used in a washing and/or rinsing operation in a washing machine leads to a reduced heating element incrustation and reduced laundry ash deposition on garments.

It is another object of the present invention to provide a method of removing and preventing deposition of limescale in a clothes washing machine.

It is another object of the present invention to provide a method of softening the water in the main and/or in the rinse cycle of a clothes washing machine.

### Summary of the invention

In a first aspect, the present invention relates to a liquid water softener composition comprising:
- at least one amino carboxylic complexing agent selected from the group consisting of methyl glycine diacetic acid (MGDA), glutamic acid diacetic acid (GLDA), their salts and combinations thereof,
- at least one monomeric polycarboxylate selected from the group consisting of, citrates, gluconates, oxydisuccinates, glycerol mono- di- and trisuccinates, carboxymethyloxysuccinates, carboxymethyloxymalonates, dipicolinates, hydroxyethyliminodiacetates, iminodisuccinates, and combinations thereof; and
- at least one organic acid selected from the group consisting of citric, acetic, formic, glycolic and oxalic acid, and combinations thereof;

wherein the ratio in weight of the at least one monomeric polycarboxylate to the at least one organic acid is between 5:1 and 1:1; and
wherein the composition has a pH of less than 7 and substantially free from surfactants.

The present invention further relates to a method of removing and preventing the deposition of limescale in a clothes washing machine and the use of the composition in the main wash or/and rinse cycle of a clothes washing machine. The essential features of the invention are set out in independent claims 1, 13, 14. Further preferred embodiments are described in dependent claims 2-12.

### Detailed description of the invention

In a first aspect, the present invention relates to a liquid water softener composition comprising:
- at least one amino carboxylic complexing agent selected from the group consisting of methyl glycine diacetic acid (MGDA), glutamic acid diacetic acid (GLDA), their salts and combinations thereof,
- at least one monomeric polycarboxylate selected from the group consisting of, citrates, gluconates, oxydisuccinates, glycerol mono- di- and trisuccinates, carboxymethyloxysuccinates, carboxymethyloxymalonates, dipicolinates, hydroxyethyliminodiacetates, iminodisuccinates, and combinations thereof;
- and at least one organic acid selected from the group consisting of citric, acetic, formic, glycolic and oxalic acid, and combinations thereof;

wherein the ratio in weight of the at least one monomeric polycarboxylate to the at least one organic acid is between 5:1 and 1:1; and
wherein the composition has a pH of less than 7 and the composition is substantially free from surfactants.

The formation of limescale in the washing process is made possible by the presence of anions like Carbonate or Phosphate, which can be found in most detergents where they are used as builders and source of alkalinity. An additional source of carbonate can come via bicarbonate in the water supply. At higher temperatures bicarbonate undergoes a reaction whereby it converts to carbonate. Carbonate and Phosphate can react with Ca/Mg coming from the water to create limescale.

In order to prevent the build-up of scale in the wash over time it is important to avoid precipitates of Ca- and Mg-Carbonate/Phosphate from forming and growing. Consequently, a complexing system is necessary that prevents formation, growth and deposition of insoluble precipitates.

The composition according to the invention softens hard water, by neutralizing Ca and Mg ions and keeping them in solution, therefore, avoiding that they bind to carbonate and form limescale. It also limits the further growth of limescale crystals eventually deposited.

The composition according to the invention is eco-friendly as it comprises biodegradable polymer agents. The present inventors have observed that the ratio of the at least one monomeric polycarboxylate to the at least one organic acid together with the at least one amino carboxylic complexing agent lead to a composition that is effective in protecting a clothes washing machine against limescale and dirt. The composition is also effective against deposition of inorganic incrustations in garments. Therefore, the composition is a water softener composition.

In one embodiment, the ratio in weight of the at least one monomeric polycarboxylate to the at least one organic acid is between 4:1 and 2:1, preferably between 3.5:1 and 2.5:1, more preferably about 3:1.

The at least one amino carboxylic complexing agent is selected from the group consisting of methyl glycine diacetic acid (MGDA), glutamic acid diacetic acid (GLDA), their salts and combinations thereof, preferably wherein the at least one amino carboxylic complexing agent is glutamic acid diacetic acid (GLDA). The composition may comprise at least 1 wt.% of said at least one monomeric polycarboxylate, based on the total weight of the composition, preferably at least 5 wt.%, more preferably between 5 wt.% and 30 wt.%, even more preferably between 10 wt.% and 20 wt.%, such as for example between 10 wt.% and 15 wt.%.

The at least one monomeric polycarboxylate is selected from the group consisting of, citrates, gluconates, oxydisuccinates, glycerol mono- di- and trisuccinates, carboxymethyloxysuccinates, carboxymethyloxymalonates, dipicolinates, hydroxyethyliminodiacetates, iminodisuccinates, and combinations thereof, preferably the at least one monomeric polycarboxylate is a citrate, more preferably trisodium citrate.

The at least one organic acid is selected from the group consisting of citric, acetic, formic, glycolic and oxalic acid, and combinations thereof; preferably the at least one organic acid is citric acid.

A preferred composition, which is specially effective against limescale and dirt deposition on the solid surfaces of a clothes washing machine and against deposition of inorganic incrustations in garments, comprises glutamic acid diacetic acid (GLDA), trisodium citrate, and citric acid, wherein the ratio in weight of the trisodium citrate : citric acid is between 5:1 and 1:1, preferably between 4:1 and 2:1, more preferably between 3.5:1 and 2.5:1, most preferably about 3:1.

Optionally, the composition may comprise a "pH buffering means", which is any compound which when mixed with another solution of higher pH makes the resulting solution able to resist a decrease in hydrogen ion concentration. Suitable pH buffers may be based upon citric, acetic, phosphoric, or boric acid, or any other buffer systems described in literature. The composition may comprise between 0.2 wt.% and 8 wt.% of the pH buffering means, based on the total weight of the composition.

The composition is neutral or acidic, therefore, the composition has a pH of less than 7, preferably less than 6, more preferably between 3 and 6, even more preferably between 4 and 6.

The composition may further comprise a suspending agent, which prevents redeposition of limescale particles eventually formed and of dirt removed from a garment by a laundry detergent. This suspending agent may be of natural source, such as a natural sourced polymer, for example a polysaccharide. The composition may then further comprise at least one homogeneous polysaccharide constituted of a single species of monosaccharides, preferably having at least 0.5 carboxyl groups per monosaccharide unit, more preferably at least 1 carboxyl groups per monosaccharide unit, even more preferably at least 1.5 carboxyl groups per monosaccharide unit. The at least one homogeneous polysaccharide constituted of a single species of monosaccharides may be selected from the group consisting of glucosans, modified starches, cellulose and its derivatives, fructosans and combinations thereof; preferably selected from the group of inulin and its derivatives; more preferably selected from dicarboxy and carboxymethyl inulin, and combinations thereof; even more preferably wherein the at least one homogeneous polysaccharide constituted of a single species of monosaccharides is carboxymethyl inulin.

The composition may comprise effective amounts of the polysaccharide in order to achieve a suspending effect. For example, the composition may comprise at least 0.005 wt. % of said at least one homogeneous polysaccharide constituted of a single species of monosaccharides, based on the total weight of the composition, preferably at least 0.01 wt.%, more preferably between 0.05 and 2.5 wt.%, even more preferably between 0.1 and 1 wt.%, such as for example between 0.1 and 0.5 wt.%

The composition of the invention may be liquid or gel, and it may comprise at least 50 wt.% water, based on the total weight of the composition, preferably at least 60 wt.%, more preferably between 65 wt.% and 95 wt.%, even more preferably between 70 wt.% and 90 wt.%, such as for example 75 wt.% and 85 wt.%.

The composition is substantially free from surfactant and the composition is substantially free from any fabric softening actives, and/or bleach. By substantially free we mean less than 5wt.%, of each and any combination or all of the ingredients listed above, based on the total weight of the composition, preferably less than 1 wt.%, more preferably less than 0.5 wt.%, most preferably less than 0.1 wt.%, for example less than 0.01 wt.%. It will be understood that the composition is substantially free from surfactant, meaning that no surfactant is intentionally added to the formulation.

The composition may further comprise preservative, for example, to inhibit the growth of moulds and yeasts. Examples of suitable preservatives are lactic acid, potassium sorbate and sodium benzoate.

In a second aspect, the invention relates to a method of removing and preventing the deposition of limescale in a clothes washing machine by providing a composition according to the first aspect of the invention.

The method according to the second aspect is preferably carried out while the machine is being used for washing clothes. This mean that the composition may be added together with a detergent composition having as primary goal to remove dirt and grim from the garments being washed.

In a third aspect, the invention relates to a use of the composition according to the first aspect of the invention for softening the water in the main wash and/or the rinse cycle of a clothes washing machine.

In the methods the composition may be provided in a sustained release manner through the wash and rinse cycle in a single product. Delayed release of the composition could be used such that the composition is released during the rinse cycle only, or substantially most of the composition (greater than 50%) is released into the rinse cycle.

The composition may be provided together with a detergent, wherein said detergent may be in powder, granular or tablet form.

The invention will be further described, by way of example, with the reference to the following non-limiting embodiments.

### Examples

### Compositions

Table 1 shows compositions, in which compositions C1-C3 are comparative compositions and compositions E1-E4 are compositions according to the invention.

**Table 1. Compositions**

| **Ingredient wt.%** | **Compositions** | | | | | | |
|---|---|---|---|---|---|---|---|
| | **C1** | **C2** | **C3** | **E1** | **E2** | **E3** | **E4** |
| Deionized water | 79.90 | 80.00 | 78.60 | 80.00 | 80.55 | 79.98 | 80.48 |
| Carboxymethyl Inulin (15%) | 1.50 | 2.00 | 1.50 | 1.50 | 1.50 | 1.50 | 1.50 |
| GLDA (47%) | 1.50 | 1.50 | 1.50 | 1.50 | 1.50 | 1.50 | 1.50 |
| Trisodium Citrate | 15.00 | 15.00 | 16.00 | 12.00 | 12.00 | 12.00 | 12.00 |
| Citric acid Anhydrous | 1.50 | 0.90 | 1.80 | 4.00 | 4.00 | 4.00 | 4.00 |
| Xanthan Gum | 0.30 | 0.30 | 0.30 | 0.20 | 0.20 | 0.32 | 0.32 |
| Lactic Acid | 0 | 0 | 0 | 0.80 | 0 | 0 | 0 |
| Potassium Sorbate | 0.30 | 0.30 | 0.30 | 0 | 0.25 | 0 | 0.20 |
| Sodium Benzoate | 0 | 0 | 0 | 0 | 0 | 0.70 | 0 |
| **pH** | 5.60 | 5.70 | 5.35 | 4.60 | 4.80 | 4.65 | 4.60 |

| | | | | | | | |
|---|---|---|---|---|---|---|---|
| Lactic acid, potassium sorbate and sodium benzoate are preservatives, which, for example, inhibit the growth of moulds and yeasts. | | | | | | | |

### Performance tests

### Washing protocol

Batches of garments including standard cloth fabrics Empa 221, WfK 10A and Honey Comb, were washed with a commercial laundry detergent (Dash Powder with Actilift, P&G, Italy) and with combinations of the commercial laundry detergent (Dash Powder with Actilift, P&G, Italy) and the compositions of Table 1. Each batch of garments was washed 32 times in a washing machine using the following washing protocol:
- Washing machine: Bosch Maxx7 Vario Perfect WAE20187II
- Wash cycle: Normal cotton
- Wash temperature: 60 °C
- Water Hardness: 43 ± 1 °fH
- Number of Wash cycles: 32 - with rotation of the heating elements and ballast every 4 washes.

Table 2 shows the performance, considering heating element encrustation and laundry ash, of the commercial laundry detergent and the combinations of the commercial laundry detergent and the compositions of Table 1. In table 2, examples with an asterisk (*) are comparative examples.

### Heating element encrustation determination

The heating element encrustation is the encrustation deposited on the heating element and is determined by weighing the heating element before and after 32 washes. The difference in weight represents the heating element encrustation.

### Laundry ash determination

The laundry ash refers to the amount of inorganic incrustations in each batch of garments. This is determined by burning the batch of garments at 550°C and by weighing the remaining ashes.

**Table 2. Performance**

| **Ingredient** | **Example** | | | | | | | |
|---|---|---|---|---|---|---|---|---|
| | **1*** | **2*** | **3*** | **4*** | **5** | **6** | **7** | **8** |
| Commercial laundry detergent (g) | 96.1 | 65 | 65 | 65 | 65 | 65 | 65 | 65 |
| Composition C1 (g) | | 110.4 | | | | | | |
| Composition C2 (g) | | | 110.4 | | | | | |
| Composition C3 (g) | | | | 110.4 | | | | |
| Composition E1 (g) | | | | | 110.4 | | | |
| Composition E2 (g) | | | | | | 110.4 | | |
| Composition E3 (g) | | | | | | | 110.4 | |
| Composition E4 (g) | | | | | | | | 110.4 |
| **Heating element encrustation (g)** | 5.63 | 0.73 | 1.30 | 0.52 | 0.12 | 0.11 | 0.18 | 0.25 |
| **Laundry Ash (g)** | - | 3.25 | 4.92 | 2.93 | 1.22 | 1.36 | 0.91 | 1.16 |

From the results shown in Table 2 it is demonstrated that the compositions according to the invention lead to a lower heating element encrustation and to a lower laundry ash deposition on garments.

When the compositions according to the invention are used, the heating element incrustation is reduced by at least 95% with respect to the commercial laundry detergent alone, and by at least 50% with respect to the combination of the commercial detergent and the comparative compositions.

Furthermore, when the compositions according to the invention are used, the laundry ash is reduced by at least 50% with respect to the combination of the commercial detergent and the comparative compositions.

This shows that the compositions according to the invention:
- Soften hard water, neutralizing Ca and Mg ions and keeping them in solution, avoiding that they bind to carbonate and form limescale,
- Limit the further growth of limescale crystals eventually deposited,
- And if a suspending agent is added to the compositions, they keep in suspension limescale particles eventually formed, avoiding redeposition.

## Claims

1. Liquid water softener composition comprising:
- at least one amino carboxylic complexing agent selected from the group consisting of methyl glycine diacetic acid (MGDA), glutamic acid diacetic acid (GLDA), their salts and combinations thereof;
- at least one monomeric polycarboxylate selected from the group consisting of, citrates, gluconates, oxydisuccinates, glycerol mono- di- and trisuccinates, carboxymethyloxysuccinates, carboxymethyloxymalonates, dipicolinates, hydroxyethyliminodiacetates, iminodisuccinates, and combinations thereof;
- and at least one organic acid selected from the group consisting of citric, acetic, formic, glycolic and oxalic acid, and combinations thereof;
wherein the ratio in weight of the at least one monomeric polycarboxylate to the at least one organic acid is between 5:1 and 1:1;
wherein the composition has a pH of less than 7; and
wherein the composition is substantially free from surfactant.

2. Composition according to claim 1, wherein the ratio in weight of the at least one monomeric polycarboxylate to the at least one organic acid is between 4:1 and 2:1, preferably between 3.5:1 and 2.5:1, more preferably about 3:1.

3. Composition according to claim 1 or claim 2, wherein the at least one amino carboxylic complexing agent is glutamic acid diacetic acid (GLDA).

4. Composition according to any of the preceding claims, wherein the at least one monomeric polycarboxylate is a citrate, preferably trisodium citrate.

5. Composition according to any of the preceding claims, wherein the at least one organic acid is citric acid.

6. Composition according to any of the preceding claims, wherein the composition further comprises at least one homogeneous polysaccharide constituted of a single species of monosaccharides, preferably having at least 0.5 carboxyl groups per monosaccharide unit, more preferably at least 1 carboxyl groups per monosaccharide unit, even more preferably at least 1.5 carboxyl groups per monosaccharide unit.

7. Composition according to claim 6, wherein the at least one homogeneous polysaccharide constituted of a single species of monosaccharides is selected from the group consisting of glucosans, modified starches, cellulose and its derivatives, fructosans and combinations thereof,
preferably selected from the group of inulin and its derivatives,
more preferably selected from dicarboxy and carboxymethyl inulin, and combinations thereof,
even more preferably wherein the at least one homogeneous polysaccharide constituted of a single species of monosaccharides is carboxymethyl inulin.

8. Composition according to claim 6 or claim 7, wherein the composition comprises at least 0.005 wt. % of said at least one homogeneous polysaccharide constituted of a single species of monosaccharides, based on the total weight of the composition, preferably at least 0.01 wt.%, more preferably between 0.05 and 2.5 wt.%, even more preferably between 0.1 and 1 wt.%, such as for example between 0.1 and 0.5 wt.%

9. Composition according to any of the preceding claims, wherein the composition comprises at least 50 wt.% water, based on the total weight of the composition, preferably at least 60 wt.%, more preferably between 65 wt.% and 95 wt.%, even more preferably between 70 wt.% and 90 wt.%, such as for example 75 wt.% and 85 wt.%.

10. Composition according to any of the preceding claims, wherein the composition comprises at least 0.01 wt.% of the at least one amino carboxylic complexing agent, based on the total weight of the composition, preferably at least 0.1 wt.%, more preferably between 0.1 wt.% and 5 wt.%, even more preferably between 0.25 wt.% and 2.5 wt.%, such as for example between 0.5 wt.% and 1.0 wt.%

11. Composition according to any of the preceding claims, wherein the composition comprises at least 1 wt.% of said at least one monomeric polycarboxylate, based on the total weight of the composition, preferably at least 5 wt.%, more preferably between 5 wt.% and 30 wt.%, even more preferably between 10 wt.% and 20 wt.%, such as for example between 10 wt.% and 15 wt.%.

12. Composition according to any of the preceding claims, wherein the composition has a pH of less than 6, preferably between 3 and 6, more preferably between 4 and 6.

13. A method of removing and preventing the deposition of limescale in a clothes washing machine by providing a composition according to any of the claims 1-12.

14. A use of the composition according to any of the claims 1-12 for softening the water in the main wash and/or the rinse cycle of a clothes washing machine.

## Patentansprüche

1. Flüssige Wasserenthärterzusammensetzung, umfassend:
- mindestens einen Aminocarbonsäure-Komplexbildner, ausgewählt aus der Gruppe, bestehend aus Methylglycindiessigsäure (MGDA), Glutaminsäurediessigsäure (GLDA), deren Salzen und Kombinationen davon;
- mindestens ein monomeres Polycarboxylat, ausgewählt aus der Gruppe, bestehend aus Citraten, Gluconaten, Oxydisuccinaten, Glycerinmono-, -di- und -trisuccinaten, Carboxymethyloxysuccinaten, Carboxymethyloxymalonaten, Dipicolinaten, Hydroxyethyliminodiacetaten, Iminodisuccinaten und Kombinationen davon;
- und mindestens eine organische Säure, ausgewählt aus der Gruppe, bestehend aus Zitronen-, Essig-, Ameisen-, Glykol- und Oxalsäure und Kombinationen davon;
wobei das Gewichtsverhältnis des mindestens einen monomeren Polycarboxylats zur mindestens einen organischen Säure zwischen 5:1 und 1:1 liegt;
wobei die Zusammensetzung einen pH-Wert von weniger als 7 aufweist; und
wobei die Zusammensetzung im Wesentlichen frei von Tensid ist.

2. Zusammensetzung nach Anspruch 1, wobei das Gewichtsverhältnis des mindestens einen monomeren Polycarboxylats zur mindestens einen organischen Säure zwischen 4:1 und 2:1, vorzugsweise zwischen 3,5:1 und 2,5:1, bevorzugter bei etwa 3:1 liegt.

3. Zusammensetzung nach Anspruch 1 oder Anspruch 2, wobei der mindestens eine Aminocarbonsäure-Komplexbildner Glutaminsäurediessigsäure (GLDA) ist.

4. Zusammensetzung nach einem der vorhergehenden Ansprüche, wobei das mindestens eine monomere Polycarboxylat ein Citrat, vorzugsweise Trinatriumcitrat, ist.

5. Zusammensetzung nach einem der vorhergehenden Ansprüche, wobei die mindestens eine organische Säure Zitronensäure ist.

6. Zusammensetzung nach einem der vorhergehenden Ansprüche, wobei die Zusammensetzung ferner mindestens ein homogenes Polysaccharid umfasst, das aus einer einzigen Art von Monosacchariden besteht, die vorzugsweise mindestens 0,5 Carboxylgruppen pro Monosaccharideinheit, bevorzugter mindestens 1 Carboxylgruppe pro Monosaccharideinheit, noch bevorzugter mindestens 1,5 Carboxylgruppen pro Monosaccharideinheit aufweisen.

7. Zusammensetzung nach Anspruch 6, wobei das mindestens eine homogene Polysaccharid, das aus einer einzigen Art von Monosacchariden besteht, aus der Gruppe ausgewählt ist, die aus Glucosanen, modifizierten Stärken, Cellulose und ihren Derivaten, Fructosanen und Kombinationen davon besteht,
vorzugsweise ausgewählt aus der Gruppe von Inulin und seinen Derivaten,
bevorzugter ausgewählt aus Dicarboxy- und Carboxymethylinulin und Kombinationen davon,
wobei noch bevorzugter das mindestens eine homogene Polysaccharid, das aus einer einzigen Art von Monosacchariden besteht, Carboxymethylinulin ist.

8. Zusammensetzung nach Anspruch 6 oder Anspruch 7, wobei die Zusammensetzung mindestens 0,005 Gew.-% des mindestens einen homogenen Polysaccharids, das aus einer einzigen Art von Monosacchariden besteht, bezogen auf das Gesamtgewicht der Zusammensetzung, umfasst, vorzugsweise mindestens 0,01 Gew.-%, bevorzugter zwischen 0,05 und 2,5 Gew.-%, noch bevorzugter zwischen 0,1 und 1 Gew.-%, wie zum Beispiel zwischen 0,1 und 0,5 Gew.-%.

9. Zusammensetzung nach einem der vorhergehenden Ansprüche, wobei die Zusammensetzung mindestens 50 Gew.-% Wasser, bezogen auf das Gesamtgewicht der Zusammensetzung, umfasst, vorzugsweise mindestens 60 Gew.-%, bevorzugter zwischen 65 Gew.-% und 95 Gew.-%, noch bevorzugter zwischen 70 Gew.-% und 90 Gew.-%, wie zum Beispiel 75 Gew.-% und 85 Gew.-%.

10. Zusammensetzung nach einem der vorhergehenden Ansprüche, wobei die Zusammensetzung mindestens 0,01 Gew.-% des mindestens einen Aminocarbonsäure-Komplexbildners, bezogen auf das Gesamtgewicht der Zusammensetzung, umfasst, vorzugsweise mindestens 0,1 Gew.-%, bevorzugter zwischen 0,1 Gew.-% und 5 Gew.-%, noch bevorzugter zwischen 0,25 Gew.-% und 2,5 Gew.-%, wie zum Beispiel zwischen 0,5 Gew.-% und 1,0 Gew.-%.

11. Zusammensetzung nach einem der vorhergehenden Ansprüche, wobei die Zusammensetzung mindestens 1 Gew.-% des mindestens einen monomeren Polycarboxylats, bezogen auf das Gesamtgewicht der Zusammensetzung, umfasst, vorzugsweise mindestens 5 Gew.-%, bevorzugter zwischen 5 Gew.-% und 30 Gew.-%, noch bevorzugter zwischen 10 Gew.-% und 20 Gew.-%, wie zum Beispiel zwischen 10 Gew.-% und 15 Gew.-%.

12. Zusammensetzung nach einem der vorhergehenden Ansprüche, wobei die Zusammensetzung einen pH-Wert von weniger als 6, vorzugsweise zwischen 3 und 6, bevorzugter zwischen 4 und 6 aufweist.

13. Verfahren zum Entfernen und Verhindern von Kalkablagerungen in einer Wäschewaschmaschine durch Bereitstellen einer Zusammensetzung nach einem der Ansprüche 1-12.

14. Verwendung der Zusammensetzung nach einem der Ansprüche 1-12 zum Enthärten des Wassers im Hauptwaschgang und/oder im Spülgang einer Wäschewaschmaschine.

## Revendications

1. Composition liquide pour adoucisseur d'eau comprenant :
- au moins un agent complexant aminocarboxylique choisi dans le groupe constitué de l'acide méthylglycinediacétique (MGDA), de l'acide diacétique glutamique (GLDA), de leurs sels et de leurs combinaisons ;
- au moins un polycarboxylate monomère choisi dans le groupe constitué par les citrates, les gluconates, les oxydisuccinates, les mono-, di- et trisuccinates de glycérol, les carboxyméthyloxysuccinates, les carboxyméthyloxymalonates, les dipicolinates, les hydroxyéthyliminodiacétates, les iminodisuccinates et leurs combinaisons ;
- et au moins un acide organique choisi dans le groupe constitué des acides citrique, acétique, formique, glycolique et oxalique, et des combinaisons de ceux-ci ;
dans laquelle le rapport en poids de l'au moins un polycarboxylate monomère à l'au moins un acide organique se situe dans l'intervalle allant de 5:1 à 1:1 ;
la composition ayant un pH inférieur à 7 ; et
la composition étant sensiblement exempte de tensioactif.

2. Composition selon la revendication 1, dans laquelle le rapport en poids de l'au moins un polycarboxylate monomère à l'au moins un acide organique se situe dans l'intervalle allant de 4:1 à 2:1, de préférence de 3,5:1 à 2,5:1, plus préférablement d'environ 3:1.

3. Composition selon la revendication 1 ou la revendication 2, dans laquelle l'au moins un agent complexant aminocarboxylique est l'acide diacétique glutamique (GLDA).

4. Composition selon l'une quelconque des revendications précédentes, dans laquelle l'au moins un polycarboxylate monomère est un citrate, de préférence le citrate trisodique.

5. Composition selon l'une quelconque des revendications précédentes, dans laquelle l'au moins un acide organique est l'acide citrique.

6. Composition selon l'une quelconque des revendications précédentes, dans laquelle la composition comprend en outre, au moins un polysaccharide homogène constitué d'une seule espèce de monosaccharides, ayant de préférence au moins 0,5 groupe carboxyle par motif monosaccharide, plus préférablement au moins 1 groupe carboxyle par motif monosaccharide, voire plus préférablement, au moins 1,5 groupe carboxyle par motif monosaccharide.

7. Composition selon la revendication 6, dans laquelle l'au moins un polysaccharide homogène constitué d'une seule espèce de monosaccharides est choisi dans le groupe constitué des glucosanes, des amidons modifiés, de la cellulose et de ses dérivés, des fructosanes et de leurs combinaisons,
de préférence choisi dans le groupe de l'inuline et de ses dérivés,
plus préférablement choisi parmi la dicarboxyinuline et la carboxyméthylinuline, et leurs combinaisons,
encore plus préférablement, l'au moins un polysaccharide homogène constitué d'une seule espèce de monosaccharides étant la carboxyméthylinuline.

8. Composition selon la revendication 6 ou la revendication 7, dans laquelle la composition comprend au moins 0,005 % en poids dudit au moins un polysaccharide homogène constitué d'une seule espèce de monosaccharides, sur la base du poids total de la composition, de préférence au moins 0,01 % en poids, plus préférablement entre 0,05 et 2,5 % en poids, encore plus préférablement entre 0,1 et 1 % en poids, comme par exemple entre 0,1 et 0,5 % en poids.

9. Composition selon l'une quelconque des revendications précédentes, dans laquelle la composition comprend au moins 50 % en poids d'eau, sur la base du poids total de la composition, de préférence au moins 60 % en poids, plus préférablement entre 65 % en poids et 95 % en poids, encore plus préférablement entre 70 % en poids et 90 % en poids, comme par exemple 75 % en poids et 85 % en poids.

10. Composition selon l'une quelconque des revendications précédentes, dans laquelle la composition comprend au moins 0,01 % en poids de l'au moins un agent complexant aminocarboxylique, sur la base du poids total de la composition, de préférence au moins 0,1 % en poids, plus préférablement entre 0,1 % en poids et 5 % en poids, encore plus préférablement entre 0,25 % en poids et 2,5 % en poids, comme par exemple entre 0,5 % en poids et 1,0 % en poids.

11. Composition selon l'une quelconque des revendications précédentes, dans laquelle la composition comprend au moins 1 % en poids dudit au moins un polycarboxylate monomère, sur la base du poids total de la composition, de préférence au moins 5 % en poids, plus préférablement entre 5 % en poids et 30 % en poids, encore plus préférablement entre 10 % en poids et 20 % en poids, comme par exemple entre 10 % en poids et 15 % en poids.

12. Composition selon l'une quelconque des revendications précédentes, dans laquelle la composition a un pH inférieur à 6, de préférence entre 3 et 6, plus préférablement entre 4 et 6.

13. Procédé d'élimination et de prévention du dépôt de calcaire dans une machine à laver le linge par fourniture d'une composition selon l'une quelconque des revendications 1 à 12.

14. Utilisation de la composition selon l'une quelconque des revendications 1 à 12, pour adoucir l'eau dans le cycle de lavage principal et/ou le cycle de rinçage d'une machine à laver le linge.
